# EUROPEAN PATENT APPLICATION

(11) **EP 1 005 902 A2**
(43) Date of publication of application: **07.06.2000**
(21) Application number: 99122746.3
(22) Date of filing: 16.11.1999
(51) Int. Cl.: B01F 17/28, B01F 17/34, B01F 17/42, C11D 1/10, C11D 1/37

(54) **Pre-formed emulsifying systems**

(30) Priority: 18.11.1998 IT TO980969
(71) Applicant: Zschimmer & Schwarz Italiana S.p.A., 13038 Tricerro (Vercelli) (IT)
(72) Inventor: Dahms, Sebastian, 42489 Wuelfrath (DE); Guala, Fabrizio, 13039 Trino (Vercelli) (IT); Merlo, Elisabetta, 13039 Trino (Vercelli) (IT)
(74) Representative: Rambelli, Paolo

(57) **Abstract**

The present invention relates to the use of N-acylate derivatives of glutamic or aspartic acid respectively of general formula (I) or (II): 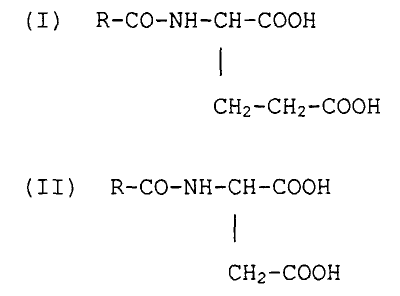 in which R is linear or branched, saturated or unsaturated C₃-C₂₂ acyl, or of a salt thereof as the primary emulsifiers in the formulation of a pre-formed emulsifying system for oil-in-water emulsions. The said pre-formed emulsifying system further includes a secondary emulsifier comprising at least one long chain C₆-C₃₀ linear or branched, saturated or unsaturated alcohol having one or more hydroxylic functions optionally ethoxylated and/or propoxylated.

## Description

The present invention relates to pre-formed emulsifying systems having a new composition.

For the purpose of obtaining stable emulsions of oil in water (O/A) the technique of emulsifying based on the use of "pre-formed emulsifying pairs", also known as pre-formed emulsifying systems or auto-emulsifying bases, has become widespread. These systems are constituted by a primary hydrophilic emulsifier which orientates the emulsion towards the O/A form and a secondary lipophilic emulsifier (or a mixture of lipophilic emulsifiers) which stabilises the emulsion. By using such pre-formed emulsifying systems it is possible to obtain a greater consistency and stability of emulsions of O/A type.

The first pre-formed emulsifying pair, still widely used, was that constituted by glycerylstearate (40-60-90% of monoglyceride) and stearic soaps (potassium, sodium, or triethanolamine stearate).

Likewise the use of acylglutamate as surfactant is known in the formulation of cosmetic and toiletry products. Lauroylglutamate, for example, having demonstrated a good emulsifying power is utilised in the formulation of dentifrice paste.

The present invention is based on the discovery that the N-acylate derivatives of glutamic and aspartic acids and their salts can be used advantageously in the preparation of pre-formed emulsifying systems as primary hydrophilic emulsifiers, and that the emulsions obtained by means of such pre-formed emulsifying systems have, for the same conditions, emulsifying particles of smaller dimensions than those obtained with the conventional pre-formed emulsifying systems.

Therefore, the subject of the present invention is the use of a N-acylate derivative of glutamic or aspartic acid respectively of the general formula (I) or (II): 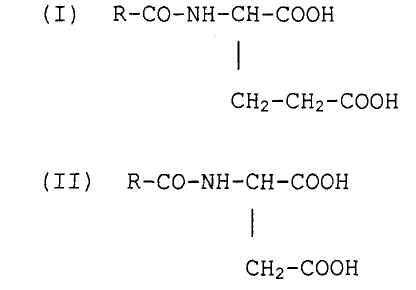 in which R is a linear or branched, saturated or unsaturated C₃-C₂₂ acyl, or a salt thereof as primary, preferably hydrophilic, emulsifier in the formulation of a pre-formed emulsifying system of the anionic/non ionic type for stable emulsions of oil in water (O/A).

The salt is preferably a salt of an alkaline metal such as sodium, potassium or lithium, of an alkaline-earth metal, of a transition metal such as chromium, iron, manganese, copper or zinc, of ammonium or of an amine base such as triethanolamine, monoethanolamine, diethanolamine, monoisopropanolamine, triisopropanolamine, 2-aminobutanol, aminoethylpropandiol, arginine, lysine, ornithine, aminomethylpropanol, aminomethylpropandiol or 2-amino-2-hydroxymethyl-1,3-propandiol.

Preferred derivatives are those in which R is the acyl of a C₁₂-C₁₈ fatty acid such as lauric, myristic, palmitic, stearic, oleic, linoleic, or linolenic acid.

Another subject of the present invention is a pre-formed emulsifying system comprising at least one compound of the formula (I) or (II) or a salt thereof as primary hydrophilic emulsifier and a secondary lipophilic emulsifier which is a linear or branched, saturated or unsaturated C₆-C₃₀ long chain alcohol having one or more hydroxylic functions optionally ethoxylated and/or propoxylated, possibly in combination with another secondary lipophilic emulsifier selected from acid, ester, and mixtures thereof, in which:
- the acid is a carboxylic acid having one or more carboxylic functions; and
- the ester is obtained by reaction between an acid as previously described and an alcohol as previously described or a linear or branched, saturated or unsaturated C₂-C₆ short chain alcohol having one or more hydroxylic functions optionally ethoxylated and/or propoxylated such as, for example, glycerine or propylene glycol.

In a preferred embodiment of the invention the N-acylate derivative of aspartic or glutamic acid or its salt is present in the pre-formed emulsifying system at a concentration of 1% to 50%, preferably 10% to 20%; the long chain alcohol is present at a concentration of 1% to 90%, preferably 20% to 40%; the carboxylic acid is present at a concentration up to 70%, preferably 20% to 30%, and the ester is present at a concentration up to 90%, preferably 30% to 40%. These concentrations are expressed in terms of weight with respect to the dry weight of the pre-formed emulsifying system.

The pre-formed emulsifying system formed as a commercial product generally includes water at a concentration not greater than 70% by weight with respect to the total of the pre-formed emulsifying system, preferably not greater than 30%.

The procedure for the preparation of pre-formed emulsifying systems of the invention provides the steps of:
1) heating the lipophilic phase (alcohol and/or acid and/or ester) to fusion;
2) adding the hydrophilic phase;
3) cooling under agitation; and
4) flaking.

Within the scope of the present invention lie further O/A emulsions for cosmetic or detergent use prepared by means of the pre-formed emulsifying systems according to the invention. The possibility, described above, of obtaining emulsifying particles of small dimensions, together with the optimum hydrating power observed, in fact allows emulsions to be obtained having significantly better sensory performance (silkiness and pleasantness to the touch) than the market standard.

In such emulsions the pre-formed emulsifying systems of the invention can be present in a wide range of concentrations, that is to say from 0.01% to 90% by weight with respect to the total emulsion, preferably from 1% to 10% by weight.

Hereinafter there are provided, by way of example, several compositions and associated processes for the preparation of stable emulsions containing the pre-formed emulsifying systems of the invention.

### Example 1: Pre-formed Emulsifying System

15% N-acylaspartate
17% long chain fatty acid (stearic)
34% cetyl stearylic alcohol
34% water

### Example 2: Pre-formed Emulsifying System

11.5% N-acylglutamate sodium salt
21% long chain saturated fatty acid
26% long chain saturated fatty acid
41.5% glycerol esters with long chain fatty acid

### Example 3: Sun Milk

### Phase A

5% pre-formed emulsifying system
5% octyl methoxycinnamate
1% butyl methoxydibenzoylmethane
3% cetearyl isononanoate
3% hexyl laurate
0.5% dimethicone

### Phase B

5% glycerine
0.25% xanthan gum
77.25% water

Heat the phase B until complete fusion and homogenisation.

Heat phase A to 60°C and add phase B to it hot and under agitation.

Homogenise for one minute.

Cool under agitation to 45°C and homogenise again for 30 seconds.

Cool to ambient temperature under agitation.

### Example 4: Body Lotion

### Phase A

3% pre-formed emulsifying system
2% jojoba oil
2% tocopherol acetate
0.5% silicones
3% hexyl laurate
4% dicaprylyl ether

### Phase B

5% glycerine
2% panthenol
NaOH qb
0.2% carbomer
78.3% water

Heat phase B to 60°C and completely swell the carbomer.

Heat phase A to 60°C and add phase B to it.

Homogenise, adjust to the desired pH value by making use of NaOH.

Cool under agitation.

## Claims

1. Use of N-acylate derivatives of glutamic or aspartic acid respectively of formula (I) or (II): 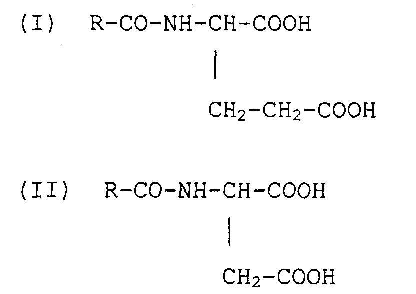 in which R is a linear or branched, saturated or unsaturated C₃-C₂₂ acyl, or a salt thereof as primary emulsifier in the formulation of a pre-formed emulsifying system for oil in water emulsions.

2. Use according to Claim 1 in which the said salt is a salt of an alkaline metal, of an alkaline-earth metal, of a transition metal, of ammonium or of an amine base.

3. Use according to Claim 2 in which the said amine base is selected from triethanolamine, monoethanolamine, diethanolamine, monoisopropanolamine, triisopropanolamine, 2-aminobutanol, aminoethylpropandiol, arginine, lysine, ornithine, aminomethylpropanol, aminomethylpropandiol and 2-amino-2-hydroxymethyl-1,3-propandiol.

4. Use according to any of Claims 1 to 3 in which R is the acyl of a C₁₂-C₁₈ fatty acid such as lauric, myristic, palmitic, stearic, oleic, linoleic, or linolenic acid.

5. A pre-formed emulsifying system comprising at least one derivative according to any of Claims 1 to 4 and a secondary emulsifier comprising a linear or branched, saturated or unsaturated C₆-C₃₀ long chain alcohol having one or more hydroxilic functions.

6. A pre-formed emulsifying system according to Claim 5, in which the said hydroxilic functions are ethoxylated and/or propoxylated.

7. A pre-formed emulsifying system according to Claim 5 or Claim 6, which further includes a secondary lipophilic emulsifier selected from a carboxylic acid having one or more hydroxylic functions, an ester obtained by reaction of the said carboxylic acid with the said long chain alcohol or with a short chain C₂-C₆, linear or branched, saturated or unsaturated alcohol having one or more hydroxylic functions, and their mixtures.

8. A pre-formed emulsifying system according to Claim 7, in which the said hydroxylic functions are ethoxylated and/or propoxylated.

9. A pre-formed emulsifying system according to Claims 5 to 8, in which the said derivative is present in the pre-formed emulsifying system at a concentration of 1% to 50%, preferably 10% to 20%; the long chain alcohol is present at a concentration of 1% to 90%, preferably 20% to 40%; the carboxylic acid is present at a concentration up to 70%, preferably 20% to 30%, and the ester is present at a concentration up to 90%, preferably 30% to 40%, concentrations being expressed in terms of weight with respect to the dry weight of the pre-formed emulsifying system.

10. A pre-formed emulsifying system according to any of Claims 5 to 9, which further includes water at a concentration not greater than 70% by weight with respect to the total of the pre-formed emulsifying system, preferably not greater than 30%.

11. A composition in the form of an emulsion including a pre-formed emulsifying system according to any of Claims 5 to 10.

12. A composition in the form of an emulsion according to Claim 11, which is an oil-in-water emulsion.
